# FASCICULE DE BREVET EUROPEEN

(11) **EP 2 728 084 B1**
(45) Date de publication et mention de la délivrance du brevet: **15.02.2017**
(21) Numéro de dépôt: 13191820.3
(22) Date de dépôt: 06.11.2013
(51) Int. Cl.: F16L 27/11, E04D 1/30, F24F 7/02, F24F 13/02, E04D 13/147, F16L 25/14

(54) **Manchon de raccordement**
Anschlussmuffe
Connecting sleeve

(30) Priorité: 06.11.2012 FR 1260517
(43) Date de publication de la demande: 07.05.2014
(73) Titulaire: Terreal, 92150 Suresnes (FR)
(72) Inventeur: Lemercier, Hervé, 11400 CASTELNAUDARY (FR); Maman, Khalid, 16000 ANGOULEME (FR); Frant, Stéphane, 24190 NEUVIC (FR)
(74) Mandataire: Petit, Maxime

(56) Documents cités:
- EP-A1- 0 440 834
- EP-A2- 2 492 411
- DE-A1- 2 833 242
- DE-A1- 19 735 264
- DE-A1- 19 811 993
- DE-U1- 29 619 257
- GB-A- 2 321 960
- GB-A- 2 373 264
- US-A- 4 953 897

## Description

La présente invention se rapporte à un manchon de raccordement entre une tuile à douille et un conduit par exemple de ventilation.

L'invention concerne plus particulièrement le raccordement d'un conduit à une tuile à douille située dans une toiture en tuiles par exemple des tuiles à emboîtement ou tuiles mécaniques ou encore des tuiles plates ou des tuiles canal, en pente comprenant des chevrons, éventuellement un écran de sous toiture, des contre-liteaux maintenant un éventuel écran de sous toiture sur les chevrons, des liteaux perpendiculaires aux chevrons et contre-liteaux.

Dans une habitation ou tout local surmonté d'une toiture, il est nécessaire d'avoir un système d'évacuation d'air. Ce système prend la forme d'un conduit à évent de chute ou encore d'une ventilation mécanique contrôlée (aussi nommée VMC). Un conduit de ventilation permet aussi l'aspiration d'air provenant de l'extérieur dans le bâtiment (cas de la VMC double flux et des chauffe-eaux thermodynamiques sur air extérieur).

Un conduit de ventilation permet l'évacuation à l'extérieur de l'air vicié d'une pièce. Le conduit s'étend à travers la maison jusqu'au toit en passant successivement à travers les combles, un isolant dans le cas de combles aménagés, éventuellement un écran de sous toiture, et la toiture.

La sortie d'un tel conduit peut être située dans la toiture et être aménagée dans une tuile spécifiquement prévue à cet effet : une tuile à douille. Cette tuile étant une tuile asymétrique munie d'un trou traversant.

Pour raccorder le conduit de ventilation à la tuile à douille, il est éventuellement nécessaire de pratiquer une ouverture dans l'écran de sous toiture, puis de faire passer le conduit à travers un passage délimité successivement par l'écran et les tuiles asymétriques adjacentes à la tuile à douille.

Les inconvénients rencontrés lors d'un raccordement sont nombreux et l'on pourra mentionner entre autres que :
- le passage délimité par les tuiles asymétriques n'est pas nécessairement dans l'alignement du trou traversant de la tuile à douille,
- le diamètre du conduit n'est pas nécessairement adapté à celui du passage précité ou du trou traversant de la tuile à douille,
- la fixation du conduit à la tuile à douille se fait par des moyens externes nécessitant du matériel.

Une méthode de raccordement connue consiste à utiliser un conduit cylindrique rectiligne de diamètre compatible avec la tuile à douille, puis à découper les tuiles adjacentes afin de pouvoir insérer le conduit jusqu'à la tuile à douille. Cette opération nécessite toutefois du matériel et de la manutention. De plus, la découpe de la tuile adjacente ne garantit plus une étanchéité à l'eau.

On peut aussi utiliser un conduit cylindrique que l'on courbe pour qu'il puisse s'insérer à travers la toiture, mais cela au détriment de la section de passage du conduit. En effet, une diminution trop importante de la section entraîne une perte de charge incompatible avec les performances usuellement demandées qui sont par exemple une perte de charge maximale de 25 Pa (Pascal) pour un débit d'évacuation d'air de 200 m³/heure.

De plus, on connaît de la demande de brevet EP 2 492 411 un système de ventilation comprenant une tuile à douille et un manchon de raccordement en plusieurs parties, conforme au préambule de la revendication 1.

Ce système de ventilation est complexe et nécessite l'installation d'une tuile à douille particulière apte à coopérer avec un manchon de raccordement formé d'un nombre important de pièces. Un tel manchon de raccordement ne peut donc pas être installé sur des tuiles à douille vendues usuellement dans le commerce.

De plus, l'installation dudit manchon de raccordement, en raison des nombreuses pièces le constituant, est une opération chronophage et complexe.

On connaît aussi de la demande de brevet EP 0 440 834 un dispositif d'aération formé de plusieurs conduits. Plus particulièrement, le dispositif d'aération divulgué comprend un premier conduit relié à un conduit de ventilation et un deuxième conduit débouchant, sous la toiture, à proximité d'une tuile faîtière.

Le dispositif d'aération n'est pas destiné à être relié avec une tuile à douille et n'assure pas des performances suffisantes au niveau de l'évacuation d'air. De plus, il est interdit dans certains pays, tels que la France, de faire déboucher un dispositif d'aération à l'intérieur d'une habitation pour des raisons de sécurité sanitaire.

La présente invention vise à remédier à au moins certains des inconvénients évoqués en proposant un manchon de raccordement de forme générale allongée, destiné à raccorder un conduit de ventilation et une tuile à douille, selon la revendication 1.

On notera que le fait que le manchon soit apte à être déformé axialement et angulairement permet aux axes A1 et A2 ou A3 et A4 d'être orientables et donc de ne plus être parallèles, par exemple lorsque le manchon est en position montée (position déformée).

La structure dudit manchon permet ainsi une insertion facilitée du manchon de raccordement à travers une toiture recouverte de tuiles asymétriques. En effet, dans une toiture recouverte de tuiles asymétriques, le trou traversant de la tuile à douille n'est pas dans l'alignement de l'ouverture délimitée par les tuiles asymétriques adjacentes, une partie d'une tuile adjacente venant se positionner en regard du trou traversant.

La structure du manchon de raccordement évite donc de procéder à des opérations de raccordement chronophages et difficiles.

En effet, il n'est plus nécessaire de découper les tuiles adjacentes à la tuile à douille afin d'effectuer le raccord ou de conformer une pièce raccordant la tuile à douille au conduit. La pièce de raccordement peut être le conduit lui-même ou une pièce annexe, au risque d'abîmer la pièce et/ou de réduire l'efficacité du système d'évacuation d'air.

De plus, en position montée, la partie intermédiaire présente une forme oblongue et un axe central décalé par rapport à l'axe du trou traversant de la tuile à douille. Ceci permet de passer le toit et notamment le chevauchement des tuiles, sans modifier significativement les pertes de charge du flux d'air provenant de la gaine raccordée.

On notera de plus qu'en position montée, le manchon de raccordement présente un axe A1 (ou A3) sensiblement coaxial à l'axe de révolution du trou traversant de la tuile à douille et un axe A2 (ou A4) sensiblement coaxial à l'axe de l'ouverture délimitée par les tuiles adjacentes.

Par ailleurs, le manchon de raccordement selon l'invention peut être utilisé avec les types usuels de tuiles à douille vendues dans le commerce. Il n'est donc plus nécessaire d'acheter une tuile à douille spécifique à un manchon de raccordement ou de manière générale à un dispositif d'évacuation d'air.

On notera en outre qu'on entend par des axes sensiblement parallèles l'un par rapport à l'autre, des axes faisant un angle l'un par rapport à l'autre qui est au maximum de 10°.

Par ailleurs, l'aptitude du manchon à être déformé peut être due à la nature du matériau dans lequel le manchon a été réalisé et/ou à des moyens aptes à être déformés axialement et/ou angulairement tels que des soufflets.

Selon une caractéristique possible, la section de passage de la partie intermédiaire est supérieure ou égale à la section de passage de la partie inférieure.

L'augmentation ou la conservation de la section de passage permet de maintenir un débit d'évacuation d'air régulier avec un minimum de perte de charge.

Selon une caractéristique possible, le manchon de raccordement est monobloc.

Le fait que le manchon soit monobloc (ou d'une seule pièce) permet, d'une part, de limiter les opérations de raccord et, d'autre part, de faciliter l'installation du manchon de raccord. Il est en effet aisé d'insérer un élément réalisé d'une seule pièce à travers l'ouverture délimitée par des tuiles asymétriques jusqu'à la tuile à douille.

Selon une autre caractéristique possible, la partie intermédiaire comporte un soufflet déformable axialement et angulairement.

La déformation angulaire et/ou axiale s'effectue par rapport à un axe orienté selon la hauteur (axe longitudinal médian) du manchon.

Ce soufflet au niveau de la partie intermédiaire permet l'adaptation du manchon de raccordement à des toitures de pente variable, ainsi qu'à des toitures où la distance entre l'écran de sous-toiture et les tuiles est variable.

De plus, ce soufflet permet d'orienter l'axe A2 des parties intermédiaire et inférieure selon l'orientation du conduit de ventilation (souvent vertical), ceci permettant de faciliter le raccord du manchon audit conduit.

En outre, ledit soufflet permet de limiter la propagation des ondes sonores à travers ledit manchon.

Selon une autre caractéristique possible, la partie intermédiaire du manchon définit une cavité, par exemple de forme oblongue, limitant la propagation des ondes sonores.

La présence d'une cavité, par exemple de forme oblongue, dans le manchon a pour fonction de limiter la propagation de certaines ondes sonores le long du conduit de ventilation. Cette cavité atténue ainsi les sons et bruits pouvant provenir de l'extérieur ainsi que ceux provenant d'un équipement générant un flux d'air.

On notera de plus qu'en position non déformée, le fait que le grand axe de la partie intermédiaire de forme oblongue soit inclus dans un plan sensiblement orthogonal aux axes A1 et A2 permet de limiter de manière plus efficace la propagation d'ondes sonores.

Selon une autre caractéristique possible, le manchon de raccordement est fabriqué dans un matériau déformable, par exemple élastiquement, tel qu'un matériau à base de polymères (exemples de matériau : PVC, PET, polyéthylène basse densité, polyéthylène haute densité, polycarbonates...).

La déformabilité permet au manchon de mieux s'adapter à un grand nombre de conditions rencontrées lors du raccordement.

La déformabilité de la partie supérieure permet le raccordement à des tuiles à douille dont le trou n'est pas circulaire, par exemple de forme ovale ou oblongue.

De plus, un matériau déformable permet d'amortir les ondes sonores et les vibrations se propageant dans le conduit.

Selon une autre caractéristique possible, la partie supérieure comporte un moyen d'adaptation à la tuile à douille, le moyen comprenant un soufflet déformable axialement et angulairement.

La déformation angulaire et/ou axiale s'effectue par rapport à un axe orienté selon la hauteur (axe longitudinal médian) du manchon.

Ce soufflet permet d'orienter l'axe A1 de la partie supérieure selon l'orientation du trou traversant de la tuile à douille ainsi que de la pente de la toiture, ceci facilite le raccord du manchon à la tuile à douille.

Le soufflet au niveau de la partie supérieure permet l'adaptation du manchon de raccordement à des toitures de pente variable, ainsi qu'à des toitures où la distance entre l'écran de sous-toiture et les tuiles est variable.

De plus, ledit soufflet permet de limiter la propagation des ondes sonores à travers ledit manchon.

Selon une variante de réalisation possible, la partie inférieure comporte un moyen d'adaptation au conduit de ventilation, le moyen comprenant un soufflet déformable.

Le soufflet au niveau de la partie inférieure permet l'adaptation du manchon de raccordement à des longueurs de conduit de ventilation variables.

De plus, ledit soufflet permet de limiter la propagation des ondes sonores à travers ledit manchon.

Selon une autre variante de réalisation possible, la partie supérieure comprend un moyen d'encliquetage permettant de fixer le manchon à la tuile à douille.

Ce moyen de fixation du manchon de raccordement à la tuile à douille permet de limiter l'utilisation d'outils, tout en améliorant la rapidité de l'opération de raccordement.

Selon une autre caractéristique possible, la partie inférieure comprend une rainure de prédécoupe pour adaptation au diamètre du conduit de ventilation.

La rainure permet une découpe plus facile tout en indiquant la limite entre deux diamètres possibles pour le raccordement du conduit de ventilation.

L'invention a également pour objet un ensemble de raccordement, destiné à raccorder un conduit de ventilation et une tuile à douille, caractérisé ce qu'il comprend :
- une pièce de liaison apte à venir se fixer sur la tuile à douille,
- un manchon de raccordement selon l'invention, ladite partie supérieure du manchon comprenant un moyen de liaison apte à être fixé sur la pièce de liaison.

Le fait que la liaison du manchon de raccordement avec la tuile à douille s'effectue par l'intermédiaire d'une pièce de liaison permet par exemple d'avoir une pièce de liaison adaptée à différents types de tuile à douille, sans qu'il soit nécessaire de modifier la structure de la partie supérieure du manchon de raccordement selon l'invention.

Selon une autre caractéristique possible, la pièce de liaison est une douille comprenant un moyen de liaison apte à coopérer avec le moyen de liaison de la partie supérieure dudit manchon de raccordement.

Selon une autre caractéristique possible, la pièce de liaison comprend un moyen d'encliquetage permettant de fixer la pièce de liaison à la tuile à douille.

Selon une autre caractéristique possible, le moyen de liaison de la pièce de liaison est un ergot, la partie supérieure dudit manchon comprend un filetage, la pièce de liaison et la partie supérieure dudit manchon étant apte à se fixer l'une à l'autre par la coopération dudit ergot avec ledit filetage.

Par ailleurs, l'invention a aussi pour objet un système de raccordement, destiné à raccorder un conduit de ventilation et une tuile à douille, caractérisé en ce qu'il comprend:
- un manchon de raccordement selon l'invention ou un ensemble de raccordement selon l'invention,
- un moyen d'étanchéité à fixer contre l'écran de sous-toiture,
ledit moyen d'étanchéité étant un anneau dont au moins l'une des faces est autocollante.

Ce système permet d'améliorer l'étanchéité à l'eau entre la toiture et les combles en dépit de l'ouverture pratiquée dans l'écran de sous-toiture. L'anneau d'étanchéité se positionne de façon à réduire les risques d'infiltration d'eau.

Selon une autre caractéristique possible, la partie intermédiaire du manchon comporte à l'extérieur au moins une rainure apte à recevoir un anneau d'étanchéité à fixer à l'écran de sous-toiture.

Cette rainure permet de faciliter le positionnement de la partie intermédiaire en regard de l'écran de sous-toiture, ainsi que par la suite le positionnement de l'anneau d'étanchéité contre l'écran.

Selon une autre caractéristique possible, la partie intermédiaire du manchon porte plusieurs rainures parallèles entre elles permettant de fixer l'anneau à l'écran pour plusieurs positions axiales différentes du manchon.

La présence de plusieurs rainures permet de s'accommoder d'une distance variable entre la toiture et l'écran.

L'invention a en outre pour objet une toiture en pente recouverte de tuiles asymétriques équipée d'un ensemble d'évacuation d'air, ladite toiture comprenant une tuile à douille et un conduit de ventilation, ledit ensemble d'évacuation comprenant un manchon de raccordement selon l'invention ou un ensemble de raccordement selon l'invention ou un système de raccordement selon l'invention, ledit manchon de raccordement ou ledit ensemble de raccordement ou ledit système de raccordement étant relié à la tuile à douille et audit conduit de ventilation.

Selon une autre caractéristique possible, ledit manchon de raccordement est disposé de manière à ce que le grand axe de la partie intermédiaire de forme oblongue soit inclus dans un plan vertical comprenant une ligne de pente P de la toiture.

Selon une autre caractéristique possible, le plan vertical incluant le grand axe de la partie intermédiaire est sensiblement orthogonal à un plan horizontal.

L'invention sera mieux comprise, et d'autres buts, détails, caractéristiques et avantages apparaîtront plus clairement au cours de la description suivante d'un mode de réalisation particulier de l'invention, donnée uniquement à titre illustratif et non limitatif, en référence aux dessins annexés, sur lesquels :
- la figure 1 représente une vue en perspective d'une portion de toiture en pente munie d'une tuile à douille ;
- la figure 2 représente une vue axiale et de face du manchon de raccordement selon l'invention ;
- la figure 3 représente une vue axiale et de profil du manchon de raccordement de la figure 2 ;
- la figure 4 représente une vue axiale et de face d'une première variante du manchon de raccordement selon l'invention ;
- la figure 5 représente une vue en coupe axiale et de profil d'un manchon de raccordement selon l'invention monté dans une toiture ;
- la figure 6 représente une vue en coupe axiale et de face d'un manchon de raccordement selon l'invention monté dans une toiture ;
- la figure 7 est une vue en perspective du manchon de raccordement de la figure 1 sur lequel est monté un anneau d'étanchéité ;
- la figure 8 représente une vue en perspective d'un ensemble de raccordement selon l'invention ;
- la figure 9 est une vue assemblée de l'ensemble de raccordement de la figure 8 ;
- la figure 10 est vue axiale et de face de l'ensemble de raccordement de la figure 9 ;
- la figure 11 est vue axiale et de profil de l'ensemble de raccordement de la figure 9.

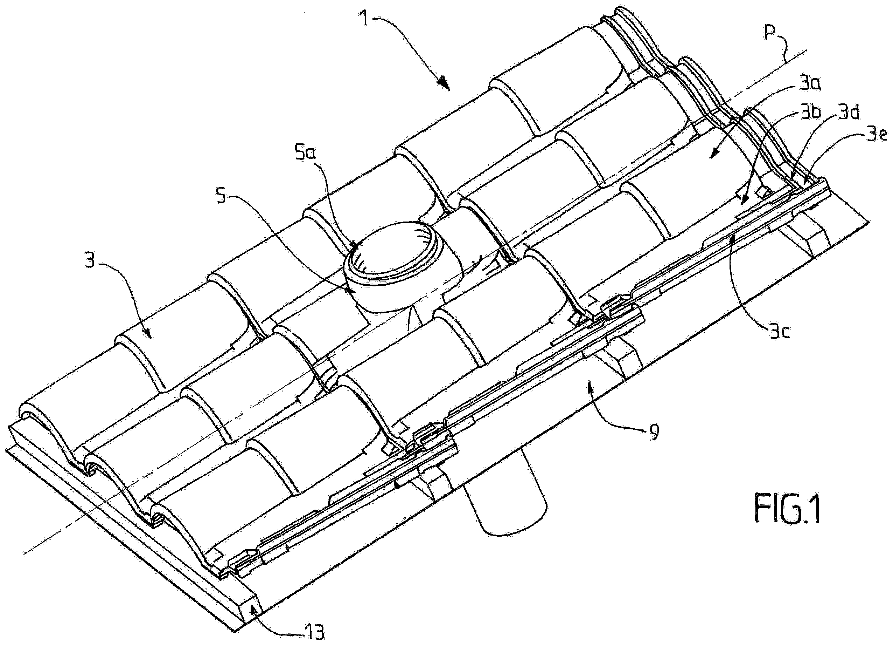

La figure 1 représente une vue en perspective d'une portion de toiture 1 en pente recouverte de tuiles 3 asymétriques et munie d'une tuile à douille 5.

Une toiture 1 en pente courante comprend des chevrons (non représentés sur la figure 1) sur lesquels est disposé un écran 9 de sous-toiture maintenu sur les chevrons par des contre-liteaux superposés aux chevrons. Perpendiculairement aux contre-liteaux (non représentés sur la figure 1) sont fixés des liteaux 13 qui portent des éléments de couvertures, tels que des tuiles 3 et accessoires. Les éléments précités sont disposés selon la ligne de pente P de la toiture.

La toiture est recouverte de tuiles 3 par exemple des tuiles à emboîtement ou tuiles mécaniques ou encore des tuiles plates ou des tuiles canal. Chaque tuile 3 connue en soi présente sensiblement une forme rectangulaire en vue de dessus divisée en deux parties allongées disposées côte à côte dans le sens de la largeur du rectangle :
- une partie galbée 3a (ou bombée),
- une partie plate 3b munie d'un moyen d'emboîtement 3c comportant des nervures (saillies) 3d et des cannelures 3e (creux), ce moyen 3c permet de fixer le bord de la partie galbée 3a de la tuile adjacente.

Cette configuration induit une asymétrie de la tuile par rapport à l'axe longitudinal de la tuile (axe qui est parallèle à la ligne de pente P).

Une tuile est recouverte partiellement par la tuile située en amont, ainsi que par la tuile adjacente.

De plus, une toiture comprend une tuile à douille 5 de même structure que les tuiles précédentes, mais celle-ci est caractérisé par un trou traversant 5a aménagé dans la partie galbée 3a et en partie dans la partie plate 3b. Le trou est en général de section circulaire, et relié à un conduit de ventilation servant à évacuer l'air vicié. La tuile à douille 5 est en général surmontée d'une lanterne, non représentée ici, afin d'empêcher l'eau de pénétrer dans le conduit de ventilation.

La partie plate 3b de la tuile adjacente à la tuile à douille 5 vient se positionner en regard du trou traversant 5a de la tuile à douille 5

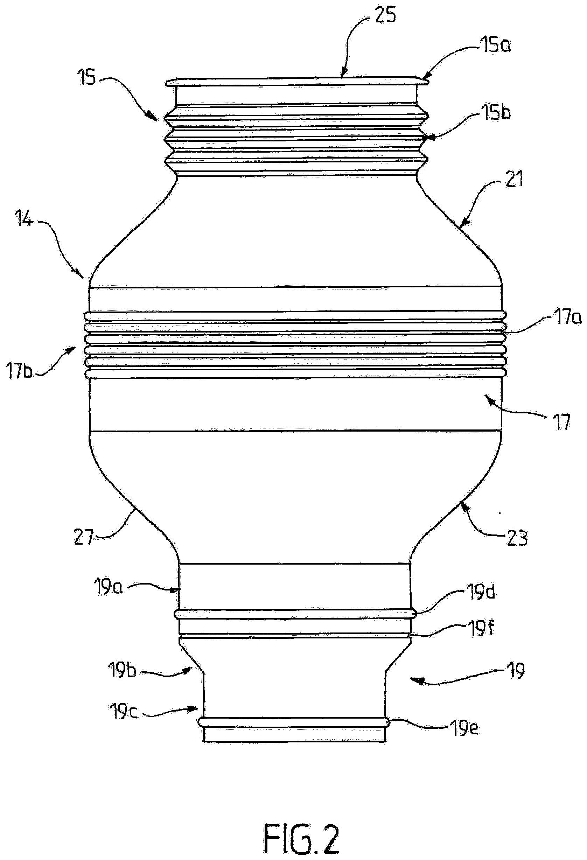

La figure 2 représente, en vue axiale et de face, un manchon 14 de raccordement selon l'invention.

Le manchon 14 de raccordement, qui présente une forme allongée, est formé d'une paroi annulaire 27 comportant plusieurs parties :
- une partie supérieure 15 de révolution, par exemple ici de forme sensiblement cylindrique,
- une partie intermédiaire 17 définissant une cavité, de forme sensiblement oblongue, située en dessous de la partie supérieure 15, et dont le grand axe est dans un plan vertical comprenant une ligne de pente P de la toiture,
- une partie inférieure 19 de révolution, par exemple ici de forme sensiblement cylindrique, située en dessous de la partie intermédiaire 17,
- une première zone de raccord 21 qui relie la partie supérieure 15 à la partie intermédiaire 17,
- une deuxième zone de raccord 23 qui relie la partie intermédiaire 17 à la partie inférieure 19.

Un trou traversant 25 est aménagé de la partie supérieure 15 jusqu'à la partie inférieure 19 du manchon 14. Ce trou 25 est délimité par la paroi annulaire 27 du manchon 14.

De plus, le manchon de raccordement 14 est réalisé dans un matériau déformable, par exemple élastiquement, tel qu'un matériau à base de polymères (exemples de matériau : PVC, PET, polyéthylène basse densité, polyéthylène haute densité, polycarbonates...).

On notera que la réalisation du manchon selon l'invention dans un matériau à base de polymères permet par exemple de fabriquer le manchon par des techniques de rotomoulage, d'extrusion et/ou de soufflage. Ces techniques de fabrication présentent l'avantage d'être peu onéreuses.

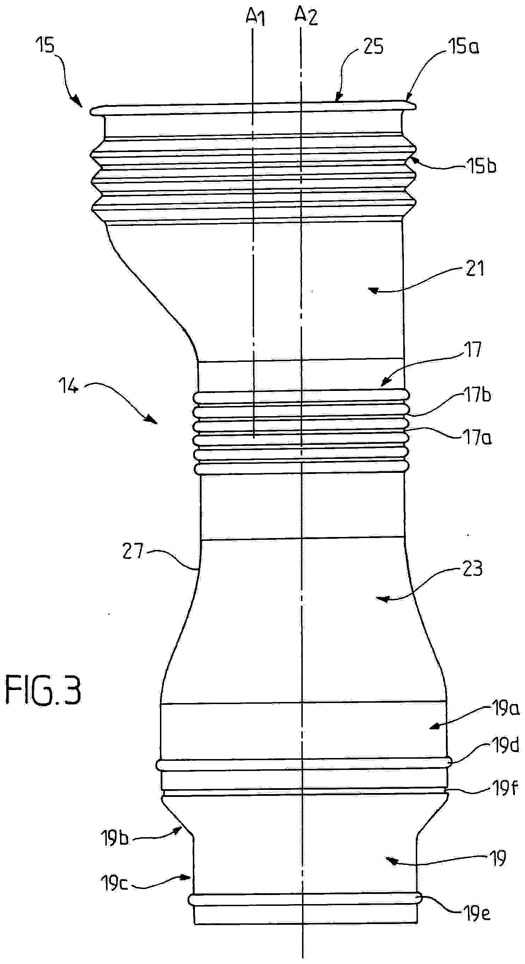

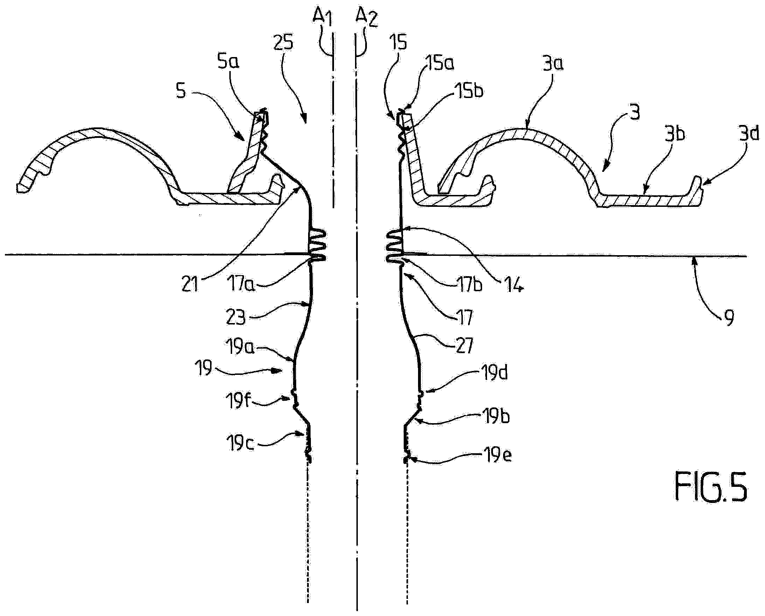

Ainsi, en position non déformée, la partie supérieure 15 comprend un axe, par exemple de révolution, A1 (visible sur les figures 3 et 5) passant par son centre de symétrie et coupant orthogonalement un plan transversal dans lequel s'inscrit le périmètre de la partie supérieure 15.

De plus, en position non déformée, les parties intermédiaire 17 et inférieure 19 présentent un axe A2 (visible sur les figures 3 et 5) passant respectivement par les centres de symétrie de chacune des parties et coupant orthogonalement des plans transversaux dans lesquels s'inscrivent les périmètres de chacune des parties 17 et 19.

Ces axes A1 et A2 sont, en position non déformée, sensiblement parallèles entre eux et décalés transversalement l'un par rapport à l'autre (Ils ne sont pas coaxiaux).

La partie supérieure 15 du manchon 14 est surmontée d'une collerette de forme sensiblement circulaire 15a, en aval de celle-ci est disposé un soufflet 15b déformable axialement et angulairement et présentant sensiblement la forme d'un accordéon.

La déformation angulaire et/ou axiale s'effectue ( à partir d'une position non déformée) par rapport à un axe orienté selon la hauteur (axe longitudinal médian) du manchon 14.

La partie intermédiaire 17 comprend au moins un soufflet 17b déformable axialement et angulairement et présentant sensiblement la forme d'un accordéon. Le soufflet 17b comprend au moins une rainure mais de préférence plusieurs, par exemple cinq. En position non déformée, les rainures sont disposées parallèlement entre elles et sont incluses dans des plans transversaux dans lesquels s'inscrit le périmètre de la partie 17.

Plus particulièrement, la partie inférieure 19 comprend :
- une première partie 19a de forme sensiblement cylindrique située en aval de la deuxième zone de raccord 23 et qui comporte une cannelure 19d,
- une deuxième partie 19c de forme sensiblement cylindrique située en aval de la première 19a et qui comporte une cannelure 19e, le diamètre de la deuxième partie 19c étant inférieur à celui de la première 19a,
- une zone de transition 19b qui relie les parties précitées et qui comporte une rainure 19f de prédécoupe située en aval de la première partie 19a.

La rainure 19f de prédécoupe facilite la découpe et indique l'endroit où la découpe doit s'effectuer pour modifier le diamètre de la partie inférieure 19 du manchon 14.

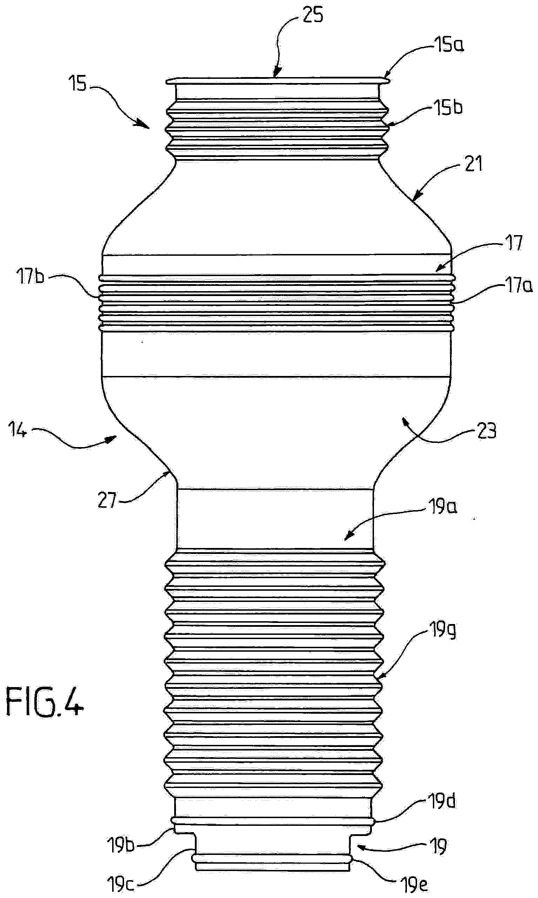

Au titre d'une première variante de réalisation, visible sur la figure 4, la partie inférieure 19 comporte un soufflet 19g déformable présentant sensiblement la forme d'un accordéon, par exemple situé en amont de la cannelure 19d.

Les soufflets 15b et 19g, les rainures 17a et 19f et les cannelures 19d et 19e sont aménagés dans la paroi annulaire 27 lors de la fabrication du manchon 14 par rotomoulage ou extrusion soufflage.

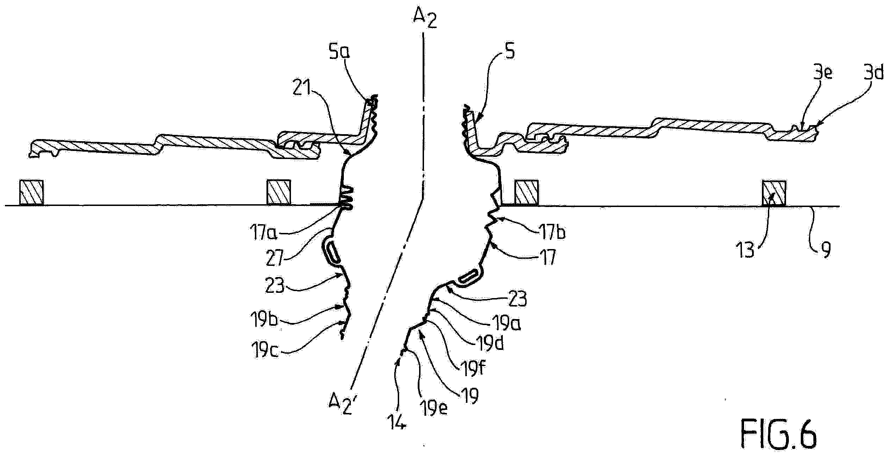

Lors de l'utilisation du manchon 14 de raccordement (utilisation illustrée aux figures 5 et 6), celui-ci est inséré à travers la toiture 1 par une ouverture aménagée dans l'écran 9 de sous-toiture. La partie intermédiaire 17 se positionne en regard du passage délimité par les tuiles 3 asymétriques et l'écran 9 de sous-toiture.

La partie supérieure 15 se fixe sur la tuile à douille 5 par encliquetage par l'intermédiaire de la collerette 15a qui se positionne en regard de l'extrémité supérieure de la paroi qui délimite le trou traversant 5a de ladite tuile 5 (en position montée, la collerette 15a vient donc prendre appui contre le rebord de la paroi de la tuile à douille qui délimité le trou traversant 5a).

Le soufflet 15b permet d'adapter le manchon 14 à l'inclinaison du toit ainsi qu'à la distance entre les tuiles 3 et l'écran 9 de sous-toiture. Ledit soufflet 15b permet de positionner les rainures 17a de la partie intermédiaire 17 en regard de l'ouverture de l'écran 9.

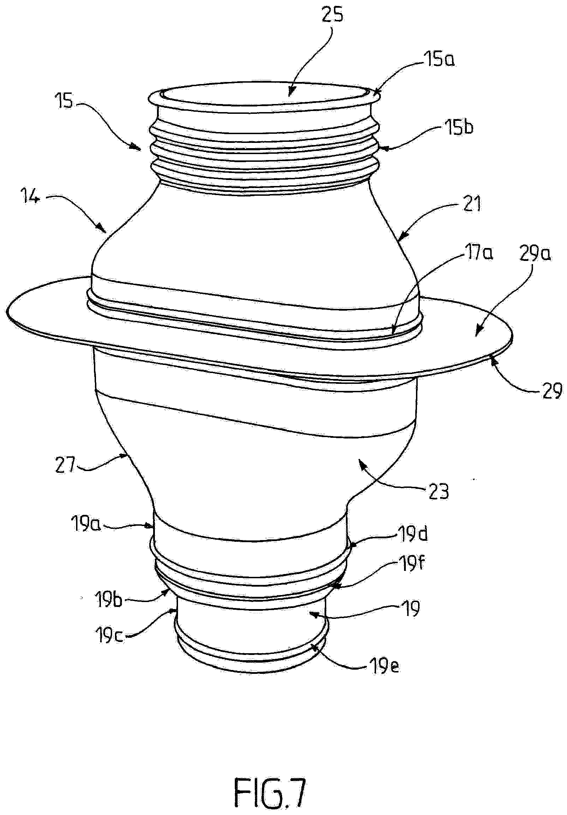

Un anneau d'étanchéité 29 (visible à la figure 7), de préférence élastique, peut être monté au niveau d'une rainure 17a de la partie intermédiaire 17 dont au moins l'une des faces 29a est autocollante et dont la face 29 est fixée contre un écran 9 de sous-toiture.

De plus, la partie intermédiaire 17 comporte un soufflet 17b déformable axialement et angulairement qui est disposé, lorsque le manchon est en position montée, en regard de l'ouverture de l'écran 9.

Comme illustré plus particulièrement à la figure 6, le soufflet permet d'orienter l'axe A2 ou une partie de l'axe A2 des parties intermédiaire et inférieure. La déformation du soufflet 17b entraîne la formation d'un axe A2' pouvant former un angle choisi avec l'axe A2 (correspondant à la position de l'axe A2 au repos). La partie inférieure 19 est reliée à un conduit de ventilation (visible à la figure 5) par un moyen connu (non représenté) tel qu'un collier de fixation, de la colle...

On notera de plus que ledit manchon de raccordement 14 est avantageusement réalisé dans un matériau déformable afin de pouvoir conformer ledit manchon 14, par exemple au niveau des soufflets 15b, 17a, 19g, de la manière la plus adéquate par rapport à la toiture (par exemple pour faciliter son installation, l'adaptation du manchon à la pente du toit...).

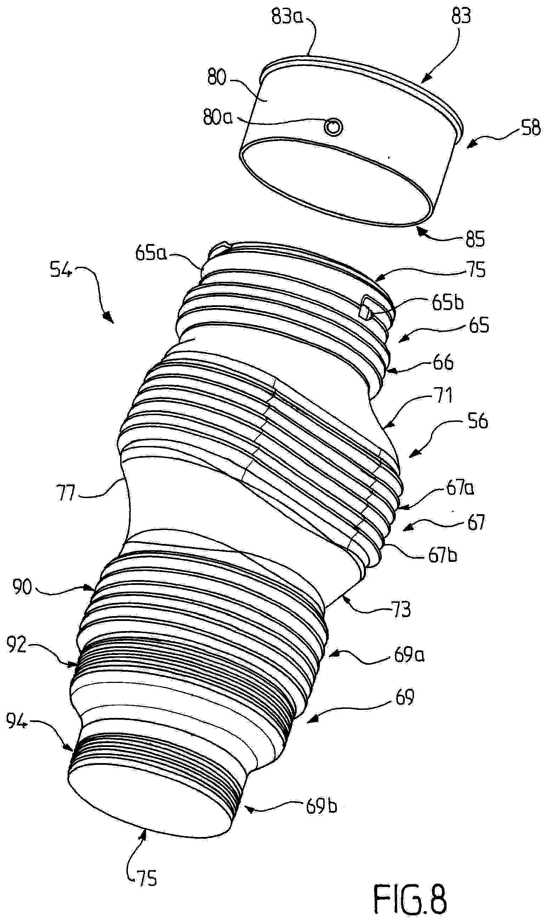

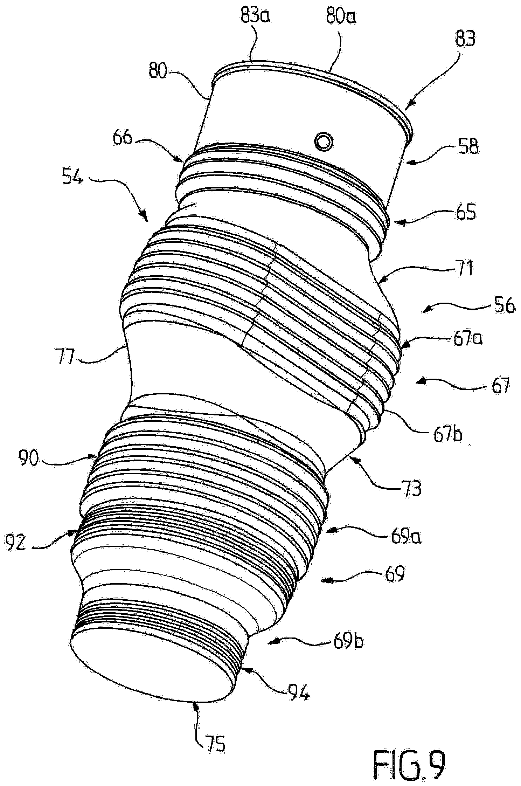

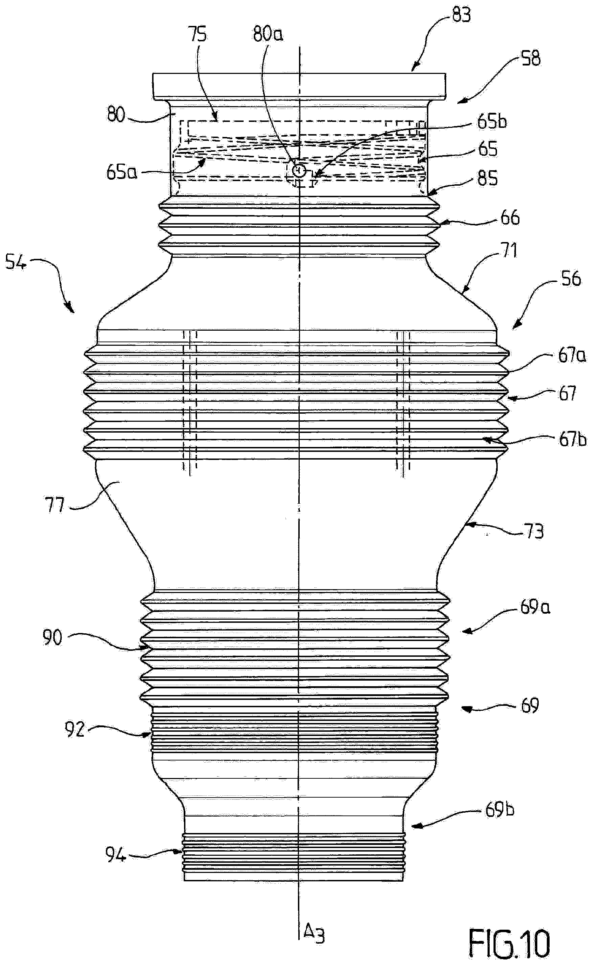

La présente invention a également pour objet un ensemble de raccordement 54, plus particulièrement illustré aux figures 8 à 11, qui comprend un manchon de raccordement 56 de forme allongée et une pièce de liaison 58 qui sont distincts l'un de l'autre.

Le manchon de raccordement 56 est formé d'une paroi annulaire 77 comportant plusieurs parties :
- une partie supérieure 65 de révolution, par exemple ici de forme sensiblement cylindrique,
- une partie intermédiaire 67 définissant une cavité, forme sensiblement oblongue, située en dessous de la partie supérieure 65,
- une partie inférieure 69 de révolution, par exemple ici de forme sensiblement cylindrique, située en dessous de la partie intermédiaire 67,
- une première zone de raccord 71 qui relie la partie supérieure 65 à la partie intermédiaire 67,
- une deuxième zone de raccord 73 qui relie la partie intermédiaire 67 à la partie inférieure 69.

Un trou traversant 75 est aménagé de la partie supérieure 65 jusqu'à la partie inférieure 69 du premier élément 56. Ce trou 75 est délimité par la paroi annulaire 77 du manchon de raccordement 56.

De plus, le manchon de raccordement 56 est réalisé dans un matériau déformable, par exemple élastiquement, tel qu'un matériau à base de polymères (exemples de matériau : PVC, PET, polyéthylène basse densité, polyéthylène haute densité, polycarbonates...).

On notera que la réalisation du manchon selon l'invention dans un matériau à base de polymères permet par exemple de fabriquer le manchon par des techniques, de rotomoulage, d'extrusion et/ou de soufflage.

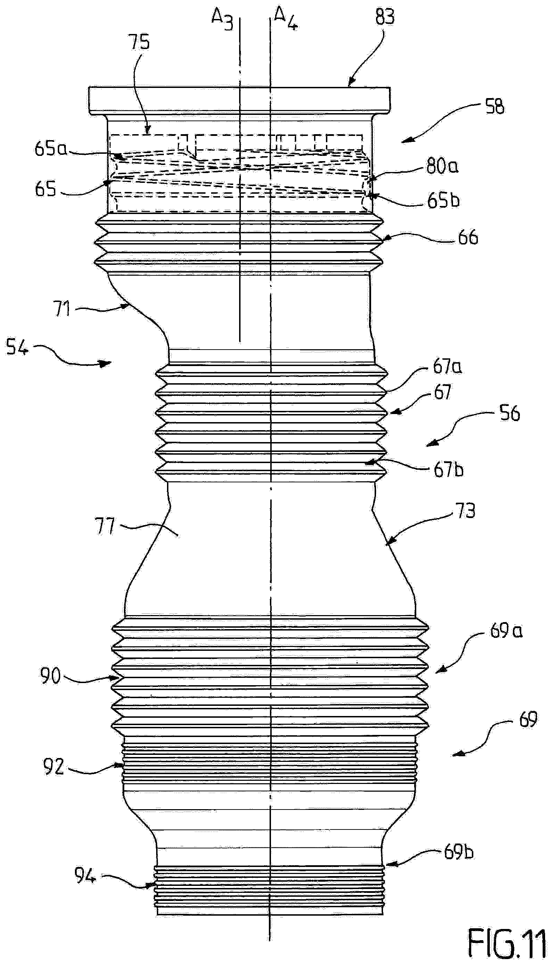

En position non déformée, la partie supérieure 65 présente un axe, par exemple de révolution, A3 (visible sur la figure 11) passant par son centre de symétrie et coupant orthogonalement un plan transversal dans lequel s'inscrit le périmètre de la partie supérieure 65.

Les parties intermédiaire 67 et inférieure 69 présentent, en position non déformée, un axe A4 (visible sur la figure 11) passant respectivement par les centres de symétrie de chacune des parties et coupant orthogonalement des plans transversaux dans lesquels s'inscrivent les périmètres de chacune des parties 67 et 69.

Ces axes A3 et A4 sont, lorsque le manchon de raccordement est en position non déformée, sensiblement parallèles entre eux et décalés transversalement l'un par rapport à l'autre (Ils ne sont pas coaxiaux).

On notera que l'axe A4 est, en position montée, inclus dans le plan vertical comprenant le grand axe de la forme oblongue et une ligne de pente P de la toiture.

De plus, la partie supérieure 65 du manchon 56 comprend, disposé sur la face externe de la paroi annulaire 77, un moyen de liaison apte à être fixé sur la pièce de liaison 58.

Ledit moyen de liaison de la partie supérieure 65 comprend un filetage 65a se terminant par une butée 65b. La partie supérieure 65 comprend en outre, disposé en aval dudit filetage 65a, un soufflet 66 déformable axialement et angulairement et présentant sensiblement la forme d'un accordéon.

La déformation angulaire et/ou axiale s'effectue par rapport à un axe orienté selon la hauteur (axe longitudinal médian) du manchon 56.

La partie intermédiaire 67 comprend au moins un soufflet 67a déformable axialement et angulairement et présentant sensiblement la forme d'un accordéon. Le soufflet 67a comprend au moins une rainure 67b mais de préférence plusieurs, par exemple cinq. Les rainures 67b sont disposées parallèlement entre elles et sont incluses dans des plans transversaux dans lesquels s'inscrit le périmètre de la partie 67.

Plus particulièrement, la partie inférieure 69 comprend :
- une première partie 69a de forme sensiblement cylindrique, située en aval de la deuxième zone de raccord 73, qui comporte un soufflet 90 déformable présentant sensiblement la forme d'un accordéon et une pluralité de cannelures 92 disposées en aval dudit soufflet 90 ;
- une deuxième partie 69b de forme sensiblement cylindrique située en aval du soufflet 90 et qui comporte une pluralité de cannelures 94, le diamètre de la deuxième partie 69b étant inférieur à celui de la première partie 69a ;
- une zone de transition 69c qui relie les parties 69a et 69b précitées.

De plus, la partie inférieure 69 du manchon 56 est apte à être reliée à un conduit de ventilation par exemple par insertion partielle du manchon de raccordement dans le conduit de ventilation.

Lesdites cannelures 92 ou 94 permettent par exemple d'augmenter les forces de frottement entre la partie inférieure 69 du manchon 56 et le conduit de ventilation afin d'assurer une meilleure fixation des éléments entre eux.

Lesdites cannelures 92 ou 94 permettent aussi d'assurer une meilleure étanchéité à l'humidité et sont des endroits adéquats sur lesquels un moyen de fixation connu, tel qu'un collier de fixation, de la colle... peut être ajouté afin de fixer fermement le manchon au conduit de ventilation.

La pièce de liaison 58, quant à elle, est une douille formée d'une paroi annulaire 80 présentant une première 83 et une deuxième extrémité 85 ouvertes opposées.

Plus particulièrement, la première extrémité 83 du deuxième élément 56 est terminée par une collerette 83a de forme sensiblement circulaire formant un moyen d'encliquetage apte à se fixer sur une tuile à douille.

De plus, la paroi annulaire 80 du deuxième élément 56 comprend un moyen de liaison 80a apte à coopérer avec le moyen de liaison 65a et 65b de la partie supérieure 65 dudit manchon 56.

Plus particulièrement, le moyen de liaison est disposé sur la face interne de la pièce de liaison 58 et est formé d'un ergot 80a.

Ladite collerette 83a est destinée à être positionnée en regard de l'extrémité supérieure de la paroi qui délimite le trou traversant 5a d'une tuile à douille 5. Plus particulièrement, la pièce de liaison 58 est apte à être insérée, par le haut, dans le trou traversant d'une tuile à douille (ladite collerette 83 vient alors prendre appui contre l'extrémité supérieure de la paroi délimitant le trou traversant de la tuile à douille).

Le manchon de raccordement 56, quant à lui, s'insère à travers l'ouverture délimitée par les tuiles asymétriques et vient se fixer à la pièce de liaison par la coopération de l'ergot 80a de la pièce de liaison 58 avec le filetage 65a de la partie supérieure 65 dudit manchon 56.

L'ergot 80a de la pièce de liaison 56 vient, en position montée, se bloquer dans la butée 65b dudit manchon 56b afin de fixer le manchon de raccordement 56 à la pièce de liaison 58.

On notera que la pièce de liaison 58 est notamment réalisée dans un matériau à base de polymères (exemples de matériau : PVC, PET, polyéthylène basse densité, polyéthylène haute densité, polycarbonates...). Néanmoins, ladite pièce de liaison 58 est de préférence réalisée dans un matériau rigide afin d'assurer une liaison plus pérenne entre la tuile à douille et ledit manchon de raccordement 56.

On notera de plus que ledit manchon de raccordement 54 est avantageusement réalisé dans un matériau déformable afin de pouvoir conformer ledit manchon 54, par exemple au niveau des soufflets 66, 67a, 90, de la manière la plus adéquate par rapport à la toiture (par exemple pour faciliter son installation, l'adaptation du manchon à la pente du toit...).

L'invention concerne également une toiture 1 en pente recouverte de tuiles 3 asymétriques qui est équipée d'un ensemble d'évacuation d'air, ladite toiture 1 comprenant une tuile à douille 5 et un conduit de ventilation, ledit ensemble d'évacuation comprenant soit un manchon de raccordement selon l'invention, soit un ensemble de raccordement selon l'invention, soit un système de raccordement selon l'invention, ledit manchon de raccordement ou ledit ensemble de raccordement ou ledit système de raccordement étant relié à la tuile à douille et audit conduit de ventilation.

Plus particulièrement, l'ensemble d'évacuation d'air comporte manchon de raccordement qui est disposé de manière à ce que le grand axe de la partie intermédiaire de forme oblongue soit inclus dans un plan vertical comprenant une ligne de pente P de la toiture.

De plus, le plan vertical incluant le grand axe de la partie intermédiaire est sensiblement orthogonal à un plan horizontal.

## Revendications

1. Manchon de raccordement (14 ; 56) de forme générale allongée, destiné à raccorder un conduit de ventilation et une tuile à douille (5), comprenant :
- une partie supérieure (15 ; 65) de révolution destinée à être raccordée à la tuile à douille (5),
- une partie inférieure (19 ; 69) de révolution destinée à être raccordée au conduit de ventilation,
- une partie intermédiaire (17 ; 67) disposée entre les parties supérieure (15 ; 65) et inférieure (19 ; 69), ledit manchon (14 ; 56) étant apte à être déformé axialement et angulairement à partir d'une position non déformée, dans laquelle :
- la partie supérieure (15 ; 65) dudit manchon (14 ; 56) comprend un axe central (A1 ; A3) orienté selon l'axe longitudinal du manchon (14 ; 56),
- la partie intermédiaire (17 ; 67) comprend un axe central (A2 ; A4) orienté selon l'axe longitudinal du manchon,
- lesdits axes (A1, A2 ; A3, A4) étant sensiblement parallèles entre eux, **caractérisé en ce que** la partie intermédiaire (17;67) présente une forme sensiblement oblongue, cette forme sensiblement oblongue étant définie dans un plan orthogonal à l'axe central (A2; A4) de la partie intermédiaire, et **en ce que** dans la position non déformée lesdits axes (A1, A2; A3, A4) sont décalés transversalement l'un par rapport à l'autre.

2. Manchon de raccordement (14 ; 56) selon la revendication 1, **caractérisé en ce que** la section de passage de la partie intermédiaire (17 ; 67) est supérieure ou égale à la section de passage de la partie inférieure (19 ; 69).

3. Manchon de raccordement (14 ; 56) selon la revendication 1 ou 2, caractérisé le manchon de raccordement (14 ; 56) est monobloc.

4. Manchon de raccordement selon l'une quelconque des revendications précédentes, **caractérisé en ce que** la partie intermédiaire (17 ; 67) comporte un soufflet (17b ; 67a) déformable axialement et angulairement.

5. Manchon de raccordement selon l'une quelconque des revendications précédentes, **caractérisé en ce que** la partie intermédiaire (17 ; 67) définit une cavité limitant la propagation des ondes sonores.

6. Manchon de raccordement selon l'une quelconque des revendications précédentes, **caractérisé en ce que** la partie supérieure (15 ; 65) comporte un moyen d'adaptation à la tuile à douille (5), le moyen comprenant un soufflet (15b ; 65) déformable axialement et angulairement.

7. Manchon de raccordement selon l'une quelconque des revendications précédentes, **caractérisé en ce que** la partie inférieure (19 ; 69) comporte un moyen d'adaptation (19g ; 69a) au conduit de ventilation, le moyen comprenant un soufflet (19g ; 69a) déformable.

8. Manchon de raccordement selon l'une quelconque des revendications précédentes, **caractérisé en ce que** le manchon (14 ; 56) de raccordement est fabriqué dans un matériau déformable.

9. Manchon de raccordement selon l'une quelconque des revendications précédentes, **caractérisé en ce que** la partie supérieure (15 ; 65) comprend un moyen d'encliquetage (15a ; 83a) permettant de fixer le manchon à la tuile à douille (5).

10. Ensemble de raccordement (54), destiné à raccorder un conduit de ventilation et une tuile à douille (5), caractérisé ce qu'il comprend :
- une pièce de liaison (58) apte à venir se fixer sur la tuile à douille (5),
- un manchon de raccordement (56) selon l'une quelconque des revendications 1 à 8, ladite partie supérieure (65) du manchon (56) comprenant un moyen de liaison (65a, 65b) apte à être fixé sur la pièce de liaison (58).

11. Ensemble de raccordement (54) selon la revendication 10, **caractérisé en ce que** la pièce de liaison (58) est une douille comprenant un moyen de liaison(80a) apte à coopérer avec le moyen de liaison (65a, 65b) de la partie supérieure (65) dudit manchon de raccordement (56).

12. Système de raccordement, destiné à raccorder un conduit de ventilation et une tuile à douille (5), **caractérisé en ce qu'**il comprend :
- un manchon de raccordement (14) conforme à l'une quelconque des revendications 1 à 9 ou un ensemble de raccordement (54) conforme à la revendication à la revendication 10 ou 11,
- un moyen d'étanchéité (20) à fixer contre un écran (9) de sous-toiture, ledit moyen d'étanchéité étant un anneau (29) dont au moins l'une des faces (29a) est autocollante.

13. Toiture (1) en pente recouverte de tuiles (3) asymétriques équipée d'un ensemble d'évacuation d'air, ladite toiture (1) comprenant une tuile à douille (5), un conduit de ventilation, ledit ensemble d'évacuation comprenant un manchon de raccordement selon l'une quelconque des revendications 1 à 9 ou un ensemble de raccordement selon l'une quelconque des revendications 10 à 11 ou un système de raccordement selon la revendication 12, ledit manchon de raccordement ou ledit ensemble de raccordement ou ledit système de raccordement étant relié à la tuile à douille et audit conduit de ventilation.

14. Toiture selon la revendication 13, **caractérisé en ce que** ledit manchon de raccordement (14 ; 54) est disposé de manière à ce que le grand axe de la partie intermédiaire (17 ; 67) de forme oblongue soit inclus dans un plan vertical comprenant une ligne de pente P de la toiture.

15. Toiture selon la revendication 14, **caractérisé en ce que** le plan vertical incluant le grand axe de la partie intermédiaire (17 ; 67) est sensiblement orthogonal à un plan horizontal.

## Patentansprüche

1. Anschlussmuffe (14; 56) allgemein länglicher Form, die bestimmt ist, eine Lüftungsleitung und einen Dunstrohröffnungsziegel (5) zu verbinden, umfassend:
- einen oberen Drehteil (15; 65), der bestimmt ist, mit dem Dunstrohröffnungsziegel (5) verbunden zu sein,
- einen unteren Drehteil (19; 69), der bestimmt ist, mit der Lüftungsleitung verbunden zu sein,
- einen Verbindungsteil (17; 67), der zwischen dem oberen (15; 65) und unteren (19; 69) Teil angeordnet ist, wobei die Muffe (14; 56) imstande ist, ab einer nicht verformten Stellung axial und winklig verformt zu werden, in welcher:
- der obere Teil (15; 65) der Muffe (14; 56) eine zentrale Achse (A1; A3) umfasst, die gemäß der Längsachse der Muffe (14; 56) ausgerichtet ist,
- der Verbindungsteil (17; 67) eine zentrale Achse (A2; A4) umfasst, die gemäß der Längsachse der Muffe ausgerichtet ist,
- wobei die Achsen (A1, A2; A3, A4) etwa parallel zueinander sind, **dadurch gekennzeichnet, dass** der Verbindungsteil (17, 67) eine etwa längliche Form aufweist, wobei diese etwa längliche Form in einer zur zentralen Achse (A2; A4) des Verbindungsteils orthogonalen Ebene definiert ist und dass die Achsen (A1, A2; A3, A4) in der nicht verformten Stellung zueinander transversal versetzt sind.

2. Anschlussmuffe (14; 56) nach Anspruch 1, **dadurch gekennzeichnet, dass** der Durchgangsquerschnitt des Verbindungsteils (17; 67) größer oder gleich dem Durchgangsquerschnitt des unteren Teils (19; 69) ist.

3. Anschlussmuffe (14; 56) nach Anspruch 1 oder 2, **dadurch gekennzeichnet, dass** die Anschlussmuffe (14; 56) einstückig ist.

4. Anschlussmuffe nach einem der vorangehenden Ansprüche, **dadurch gekennzeichnet, dass** der Verbindungsteil (17; 67) einen axial und winklig verformbaren Balg (17b; 67a) aufweist.

5. Anschlussmuffe nach einem der vorangehenden Ansprüche, **dadurch gekennzeichnet, dass** der Verbindungsteil (17; 67) einen Hohlraum definiert, der die Verbreitung von Schallwellen begrenzt.

6. Anschlussmuffe nach einem der vorangehenden Ansprüche, **dadurch gekennzeichnet, dass** der obere Teil (15; 65) ein Adaptermittel an den Dunstrohröffnungsziegel (5) aufweist, wobei das Mittel einen axial und winklig verformbaren Balg (15b; 65) umfasst.

7. Anschlussmuffe nach einem der vorangehenden Ansprüche, **dadurch gekennzeichnet, dass** der untere Teil (19; 69) ein Adaptermittel (19g; 69a) an die Lüftungsleitung aufweist, wobei das Mittel einen verformbaren Balg (19g; 69a) umfasst.

8. Anschlussmuffe nach einem der vorangehenden Ansprüche, **dadurch gekennzeichnet, dass** die Anschlussmuffe (14; 56) aus einem verformbaren Material gefertigt ist.

9. Anschlussmuffe nach einem der vorangehenden Ansprüche, **dadurch gekennzeichnet, dass** der obere Teil (15; 65) ein Rastmittel (15a; 83a) umfasst, das erlaubt, die Muffe am Dunstrohröffnungsziegel (5) zu befestigen.

10. Anschlusseinheit (54), die bestimmt ist, eine Lüftungsleitung und einen Dunstrohröffnungsziegel (5) zu verbinden, **dadurch gekennzeichnet, dass** sie umfasst:
- ein Verbindungsteil (58), das imstande ist, sich auf dem Dunstrohröffnungsziegel (5) zu fixieren,
- eine Anschlussmuffe (56) nach einem der Ansprüche 1 bis 8, wobei der obere Teil (65) der Muffe (56) ein Verbindungsmittel (65a, 65b) umfasst, das imstande ist, auf dem Verbindungsteil (58) fixiert zu sein.

11. Anschlusseinheit (54) nach Anspruch 10, **dadurch gekennzeichnet, dass** das Verbindungsteil (58) eine Hülse ist, die ein Verbindungsmittel (80a) umfasst, das imstande ist, mit dem Verbindungsmittel (65a, 65b) des oberen Teils (65) der Anschlussmuffe (56) zusammenzuwirken.

12. Anschlusssystem, das bestimmt ist, eine Lüftungsleitung und einen Dunstrohröffnungsziegel (5) zu verbinden, **dadurch gekennzeichnet, dass** es umfasst:
- eine Anschlussmuffe (14) nach einem der Ansprüche 1 bis 9 oder eine Anschlusseinheit (54) nach Anspruch nach Anspruch 10 oder 11,
- ein Dichtungsmittel (20), das an einer Unterdachabschirmung (9) zu fixieren ist, wobei das Dichtungsmittel ein Ring (29) ist, von dem mindestens eine der Seiten (29a) selbstklebend ist.

13. Schrägdach (1), gedeckt mit asymmetrischen Ziegeln (3), ausgestattet mit einer Luftableitungseinheit, wobei das Dach (1) einen Dunstrohröffnungsziegel (5), eine Lüftungsleitung umfasst, wobei die Ableitungseinheit eine Anschlussmuffe nach einem der Ansprüche 1 bis 9 oder eine Anschlusseinheit nach einem der Ansprüche 10 bis 11 oder ein Anschlusssystem nach Anspruch 12 umfasst, wobei die Anschlussmuffe oder die Anschlusseinheit oder das Anschlusssystem mit dem Dunstrohröffnungsziegel und der Lüftungsleitung verbunden ist.

14. Dach nach Anspruch 13, **dadurch gekennzeichnet, dass** die Anschlussmuffe (14; 54) derart angeordnet ist, dass die große Achse des länglichen Verbindungsteils (17; 67) in eine vertikale Ebene integriert ist, die eine Neigungslinie P des Dachs umfasst.

15. Dach nach Anspruch 14, **dadurch gekennzeichnet, dass** die vertikale Ebene, die die große Achse des Verbindungsteils (17; 67) einschließt, etwa orthogonal zu einer horizontalen Ebene ist.

## Claims

1. A sleeve connector (14; 56) with a generally elongate shape, intended to connect a ventilation duct and a flange tile (5), comprising:
- an upper part (15; 65) of revolution intended to be connected to the flange tile (5),
- a lower part (19; 69) of revolution intended to be connected to the ventilation duct,
- an intermediate part (17; 67) arranged between the upper (15; 65) and lower (19; 69) parts,
said sleeve (14; 56) being able to be axially and angularly deformed from a non-deformed position, in which:
- the upper part (15; 65) of said sleeve (14; 56) comprises a central axis (A1; A3) oriented along the longitudinal axis of the sleeve (14; 56),
- the intermediate part (17; 67) comprises a central axis (A2; A4) oriented along the longitudinal axis of the sleeve,
- said axes (A1, A2; A3, A4) being substantially parallel to one another, **characterized in that** the intermediate part (17; 67) has a substantially oblong shape, this substantially oblong shape being defined in a plane orthogonal to the central axis (A2; A4) of the intermediate part, and **in that** in the non-deformed position, said axes (A1, A2; A3, A4) are transversely offset relative to one another.

2. The sleeve connector (14; 56) according to claim 1, **characterized in that** the passage section of the intermediate part (17; 67) is larger than or equal to the passage section of the lower part (19; 69).

3. The sleeve connector (14; 56) according to claim 1 or 2, **characterized in that** the sleeve connector (14; 56) is in a single piece.

4. The sleeve connector according to any one of the preceding claims, **characterized in that** the intermediate part (17; 67) includes an axially and angularly deformable bellows (17b; 67a).

5. The sleeve connector according to any one of the preceding claims, **characterized in that** the intermediate part (17; 67) defines a cavity limiting the propagation of sound waves.

6. The sleeve connector according to any one of the preceding claims, **characterized in that** the upper part (15; 65) includes means for adapting to the flange tile (5), the means comprising an axially and angularly deformable bellows (15b; 65).

7. The sleeve connector according to any one of the preceding claims, **characterized in that** the lower part (19; 69) includes means (19g; 69a) for adapting to the ventilation duct, the means comprising a deformable bellows (19g; 69a).

8. The sleeve connector according to any one of the preceding claims, **characterized in that** the sleeve connector (14; 56) is made from a deformable material.

9. The sleeve connector according to any one of the preceding claims, **characterized in that** the upper part (15; 65) comprises a snapping means (15a; 83a) making it possible to fasten the sleeve to the flange tile (5).

10. A connector assembly (54), intended to connect a ventilation duct and a flange tile (5), **characterized in that** it comprises:
- a connecting piece (58) able to be fastened on the flange tile (5),
- the sleeve connector (56) according to any one of claims 1 to 8, said upper part (65) of the sleeve (56) comprising a connecting means (65a, 65b) able to be fastened on the connecting part (58).

11. The connector assembly (54) according to claim 10, **characterized in that** the connecting part (58) is a bush comprising a connecting means (80a) able to cooperate with the connecting means (65a, 65b) of the upper part (65) of said sleeve connector (56).

12. A connector system, intended to connect a ventilation duct and a flange tile (5), **characterized in that** it comprises:
- a sleeve connector (14) according to any one of claims 1 to 9 or a connector assembly (54) according to claim to claim 10 or 11,
- a sealing means (20) to be fastened against a roof boarding screen (9), said sealing means being a ring (29) whereof at least one of the faces (29a) is self-adhesive.

13. A sloped roof (1) covered with asymmetrical tiles (3) equipped with an air discharge assembly, said roof (1) comprising a flange tile (5), a ventilation duct, said discharge assembly comprising a sleeve connector according to any one of claims 1 to 9 or a connector assembly according to any one of claims 10 to 11 or a connector system according to claim 12, said sleeve connector or said connector assembly or said connector system being connected to the flange tile and to said ventilation duct.

14. The roof according to claim 13, **characterized in that** said sleeve connector (14; 54) is arranged such that the large axis of the oblong intermediate part (17; 67) is included in a vertical plane comprising a pitch line P of the roof.

15. The roof according to claim 14, **characterized in that** the vertical plane including the large axis of the intermediate part (17; 67) is substantially orthogonal to a horizontal plane.
